# FASCICULE DE BREVET EUROPEEN

(11) **EP 2 528 792 B1**
(45) Date de publication et mention de la délivrance du brevet: **11.12.2013**
(21) Numéro de dépôt: 10809312.1
(22) Date de dépôt: 23.12.2010
(51) Int. Cl.: B60W 30/19, B60W 10/06, B60W 10/10, B60W 10/02

(54) **PROCEDE DE CHANGEMENT DE RAPPORT AMELIORE POUR VEHICULE A MOTEUR THERMIQUE MUNI D'UN TURBOCOMPRESSEUR**
VERBESSERTES GETRIEBEÜBERSETZUNGSWECHSELVERFAHREN FÜR EIN MIT EINER WÄRMEMASCHINE BETRIEBENES FAHRZEUG MIT EINEM TURBOLADER
IMPROVED GEAR RATIO CHANGE METHOD FOR HEAT ENGINE POWERED VEHICLE PROVIDED WITH A TURBOCHARGER

(30) Priorité: 29.01.2010 FR 1050655
(43) Date de publication de la demande: 05.12.2012
(73) Titulaire: Peugeot Citroën Automobiles SA, 78140 Vélizy-Villacoublay (FR)
(72) Inventeur: GALINAUD, Florian, F-75013 Paris (FR); ROCQ, Gaëtan, F-78125 La Boissière-Ecole (FR)
(74) Mandataire: Rosenberg, Muriel Sylvie
(86) Numéro de dépôt international: PCT/FR2010/052898
(87) Numéro de publication internationale: WO 2011/092388

(56) Documents cités:
- WO-A1-03/033290
- WO-A1-2007/124710
- DE-A1- 10 332 668

## Description

L'invention concerne un procédé de changement de rapport amélioré pour véhicule à moteur thermique muni d'un turbocompresseur. L'invention a notamment pour but d'améliorer l'agrément et la performance des changements de rapport. Le document DE10332668 A1 divulgue un tel procédé permettant d'améliorer l'agrément des changements du rapport et divulgue toutes les caractéristiques du préambule de la revendication 1.

L'invention trouve une application particulièrement avantageuse pour les changements de rapport à forte charge au cours desquels l'embrayage va atteindre des couples élevés lors de la reprise de couple.

On connaît des véhicules automobiles comportant un moteur thermique muni d'un turbocompresseur permettant de suralimenter le moteur en carburant afin d'augmenter le taux de remplissage du moteur. Un système de couplage/découplage réalisé par un embrayage sec, humide (ou autre) assure la liaison entre d'une part le moteur thermique et d'autre part une boîte de vitesses connectée au train avant. S'il y a lieu, le véhicule peut comporter également un système de démarrage indépendant du moteur réalisé par un démarreur piloté.

Lors des changements de rapport, l'utilisation d'une boîte de vitesses à N rapports discrets implique une ouverture de l'embrayage pour effectuer le changement de démultiplication au sein de la boîte de vitesses, suivi d'une fermeture pilotée de celui-ci pour rejoindre la volonté du conducteur. La vitesse manquante induite par cette rupture de couple est pénalisante en termes d'agrément de conduite.

De manière générale, pour un moteur suralimenté (essence ou diesel) il existe deux types de couples maximum :
- le couple maximum dynamique correspondant au couple maximum atteignable par le moteur à un régime donné à l'instant t en tenant compte des contraintes telles que les limitations fumées, et
- le couple pleine charge correspondant au couple maximum atteignable par le moteur à un régime donné et sans contrainte de temps de réponse.

On note que le couple maximum dynamique du moteur thermique est lié à son régime et à sa pression de suralimentation (quand il est suralimenté), de manière générale on peut dire que:
- Plus le régime est élevé, plus le couple que peut fournir le moteur thermique est faible.
- Plus la pression de suralimentation chute, plus il faut du temps pour que le couple maximum dynamique rejoigne le couple pleine charge.

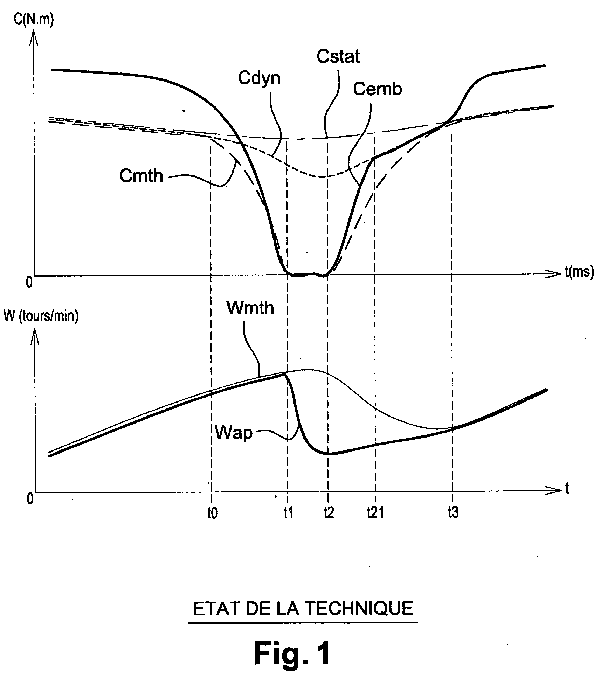

La Figure 1 montre les évolutions du couple embrayage Cemb, du couple moteur Cmth, du couple maximum dynamique Cdyn et pleine charge Cstat, ainsi que des régimes du moteur Wmth et de l'arbre primaire Wap lors de la mise en oeuvre d'un procédé de changement de rapport vitesse à forte charge selon l'état de la technique.

Plus précisément à l'instant t0, l'ouverture progressive de l'embrayage est commandée. Lors de la phase d'annulation de couple entre t0 et t1, le couple d'embrayage Cemb et le couple moteur Cmth diminuent progressivement pour atteindre le couple nul. Par ailleurs, étant donné que le régime moteur Wmth était très élevé avant le changement de rapport et que le moteur est de moins en moins alimenté en carburant, le couple maximum dynamique Cdyn chute. Comme l'embrayage assure encore une liaison entre l'arbre moteur et l'arbre primaire, le régime Wap de l'arbre primaire est confondu avec le régime Wmth du moteur.

A l'instant t1, l'embrayage est ouvert et reste ouvert jusqu'à l'instant t2. Sur cette période de temps [t1, t2], le couple d'embrayage Cemb et le couple moteur Cmth étant nuls, le changement de rapport est effectué. En outre, l'arbre primaire étant désaccouplé de l'arbre moteur, le régime Wap de l'arbre primaire diminue par rapport au régime Wmth du moteur. Le moteur étant de moins en moins alimenté, le couple maximum dynamique Cdyn continue de chuter.

Entre les instants t2 et t3, le nouveau rapport ayant été engagé, on observe une reprise de couple au cours de laquelle l'embrayage, qui est en phase de glissement, monte très vite en couple et atteint le couple maximum dynamique Cdyn à l'instant t21. Le couple de l'embrayage Cemb est ensuite limité à l'évolution du couple maximum dynamique Cdyn qui ne rejoint que très lentement le couple pleine charge Cstat. Ce phénomène est dû au fait que la pression de suralimentation a chuté fortement suite à l'annulation du couple moteur Cmth lors de la phase d'annulation du couple et ré-augmente progressivement pendant la période [t2, t3]. Lors de la phase d'accostage de l'embrayage, le régime Wap de l'arbre primaire tend vers le régime moteur Wmth qui diminue. Le régime Wap est ensuite confondu avec le régime Wmth lorsque l'embrayage se ferme.

Ainsi les stratégies classiques de changement de rapport piloté limitent le couple de l'embrayage Cemb lors de la reprise de couple au couple maximum dynamique que peut fournir le moteur thermique à l'instant t. Ceci permet de sécuriser la consigne de couple embrayage dans toutes les situations où celui-ci est glissant, sans risque d'écrouler le régime du moteur thermique et de caler celui-ci.

Toutefois de tels procédés conduisent à une reprise en deux temps suivant laquelle le couple atteint rapidement le couple dynamique puis évolue doucement vers le couple pleine charge, ce qui engendre une vitesse réduite importante lors du changement de rapport.

L'invention a notamment pour but d'éviter les désagréments d'une reprise en deux temps.

A cet effet, l'invention consiste à piloter différemment l'embrayage, de manière à anticiper l'augmentation de couple liée à la chute du régime et de la pression de suralimentation du moteur thermique.

Plus précisément, pendant la phase de reprise de couple, l'embrayage étant en phase de glissement, le couple embrayage est augmenté au-delà du couple maximum dynamique, pour viser de préférence le couple pleine charge.

On profite ainsi d'un couple supplémentaire correspondant au couple maximum du moteur thermique et à l'inertie du moteur thermique. Cela évite la reprise en deux temps puisque l'on donne comme consigne de couple à l'embrayage le couple maximum prévisible du moteur thermique au régime d'accostage.

En outre, l'invention permet d'accélérer la chute du régime du moteur thermique et donc de réduire la durée à régime élevé liée à un manque de couple.

L'invention concerne donc un procédé de changement de rapport de vitesse amélioré mis en oeuvre avec un véhicule comportant une chaîne de traction formée par :
- un moteur thermique apte à être suralimenté par un turbocompresseur,
- ce moteur thermique présentant un couple maximum dynamique correspondant au couple maximum atteignable à un régime donné à un instant donné, et un couple pleine charge correspondant au couple maximum atteignable à un régime donné et sans contrainte de temps de réponse, et
- un embrayage installé entre le moteur thermique et une boîte de vitesses en relation avec un des trains du véhicule,
   ce procédé comportant les étapes suivantes :
- ouvrir progressivement l'embrayage de manière à atteindre un couple d'embrayage nul,
- effectuer le changement de rapport de vitesse,
- piloter l'embrayage suivant une consigne de couple lors d'une phase de mise en glissement, et
- fermer l'embrayage,
   caractérisé en ce que
- la consigne de couple lorsque l'embrayage est en phase de glissement est un couple supérieur au couple maximum dynamique du moteur thermique.

Selon une mise en oeuvre, la consigne de couple est le couple pleine charge.

Selon une mise en oeuvre, la consigne de couple est atteinte entre 200 et 600 ms après que l'embrayage ait commencé à entrer en phase de glissement.

Selon une mise en oeuvre, l'augmentation du couple de l'embrayage pendant la phase de glissement est contrôlée de manière calibrable en fonction de l'écart entre le régime du moteur thermique et le régime de l'arbre primaire de la boîte de vitesses.

Selon une mise en oeuvre, plus l'écart entre le régime du moteur et le régime de l'arbre primaire est important, plus la consigne de couple de l'embrayage est importante pour profiter de l'inertie du moteur.

Selon une mise en oeuvre, une cartographie stockée dans une mémoire d'un calculateur de supervision établit une correspondance entre l'écart de vitesse et le couple de consigne de l'embrayage.

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 (déjà décrite) : une représentation graphique de l'évolution des couples de l'embrayage et du moteur ainsi que des régimes du moteur et de l'arbre primaire observables lors de la mise en oeuvre d'un procédé de changement de rapport de vitesse selon l'état de la technique;

Figure 2 : une représentation schématique d'un groupe moto-propulseur d'un véhicule mettant en oeuvre le procédé selon l'invention ;

Figure 3 : une représentation graphique de l'évolution des couples de l'embrayage et du moteur ainsi que des régimes du moteur et de l'arbre primaire observables lors de la mise en oeuvre du procédé de changement de rapport de vitesse selon l'invention.

Les éléments identiques conservent les mêmes références d'une Figure à l'autre.

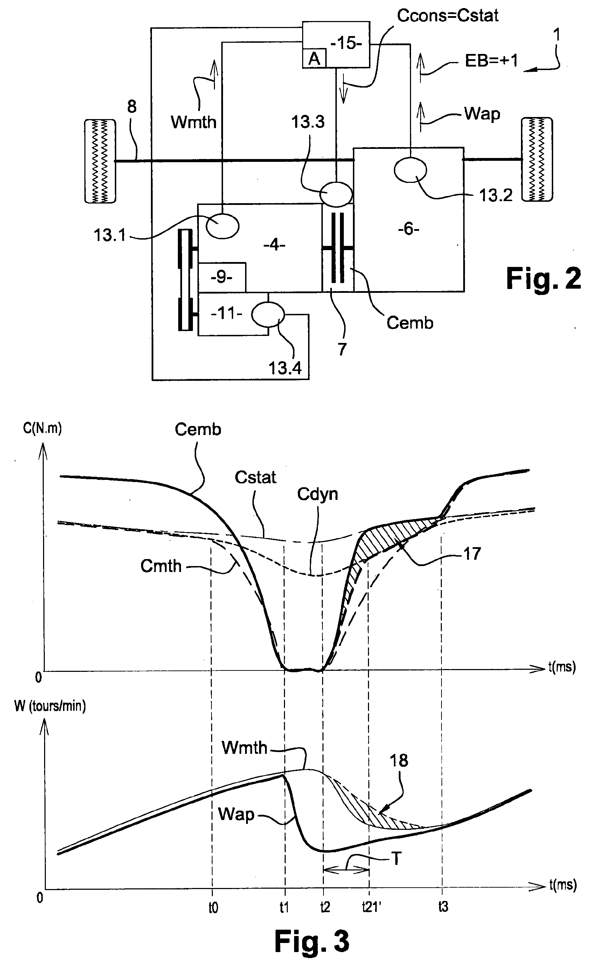

La Figure 2 montre une représentation schématique d'un groupe moto-propulseur 1 d'un véhicule automobile mettant en oeuvre le procédé selon l'invention.

Plus précisément, ce groupe 1 comporte un dispositif 4 de propulsion en relation avec une boîte 6 de vitesses à N rapports discrets par l'intermédiaire d'un système 7 de couplage/découplage classique. Cette boîte 6 de vitesses est reliée au train avant 8 par l'intermédiaire d'une descente de pont (non représentée). Le dispositif 4 de propulsion est muni d'un turbocompresseur 9 permettant de suralimenter le dispositif en carburant afin d'augmenter son taux de remplissage.

Le dispositif 4 de propulsion est par exemple un moteur à combustion interne, essence, diesel ou autre muni de son volant d'inertie. Tandis que le système 7 de couplage/découplage est réalisé par un embrayage classique sec humide ou autre. La boîte 6 de vitesses peut être une boîte de vitesses manuelle pilotée (BVMP) ou à double embrayages de type DCT (Dual Clutch Transmission en anglais).

Par ailleurs, le véhicule comporte un système 11 de démarrage de type « stop and start » indépendant du dispositif 4 de propulsion permettant un démarrage rapide et silencieux du véhicule. Dès que la vitesse du véhicule est inférieure à un seuil, le système 11 met en veille le dispositif 4 de propulsion et l'embrayage 7 est ouvert ; et dès que la vitesse du véhicule devient supérieure au seuil, le système 11 redémarre automatiquement le dispositif 4 de propulsion et l'embrayage 7 se ferme progressivement.

Chaque organe 4, 6, 7, 11 est piloté par un calculateur 13.1-13.4 de contrôle rapproché propre qui sont eux-mêmes commandés par un calculateur 15 (réel ou virtuel, c'est-à-dire intégré dans l'un des calculateurs de contrôle rapproché) dit de supervision qui prend les décisions et synchronise les actions pour répondre à la volonté du conducteur. Ce calculateur 15 de supervision pilote la chaîne de traction en fonction des situations de vie et l'état du véhicule.

Le calculateur 15 de supervision décide notamment du mode de roulage, coordonne les phases transitoires et choisit les points de fonctionnement afin d'optimiser la consommation de carburant, la dépollution et l'agrément du véhicule.

A cet effet, ce calculateur 15 reçoit notamment comme données d'entrée l'état EB de la boîte 6 de vitesse renvoyé par le calculateur 13.2, ainsi que le régime moteur Wmth renvoyé par le calculateur 13.1 et le régime Wap de l'arbre primaire renvoyé par le calculateur 13.2. Le calculateur 15 envoie également une consigne de couple Ccons à l'embrayage 7.

La Figure 3 montre les évolutions du couple embrayage Cemb, du couple moteur Cmth, des couples maximum dynamique Cdyn et pleine charge Cstat du moteur, ainsi que des régimes du moteur Wmth et de l'arbre primaire Wap lors de la mise en oeuvre du procédé de changement de rapport vitesse à forte charge selon l'invention.

Plus précisément, à l'instant t0, le calculateur 15 commande l'ouverture progressive de l'embrayage 7. Lors de la phase d'annulation de couple entre t0 et t1, le couple d'embrayage Cemb et le couple moteur Cmth diminuent progressivement pour atteindre le couple nul. Par ailleurs, étant donné que le régime moteur Wmth était très élevé avant le changement de rapport et que le moteur 4 est de moins en moins alimenté en carburant, le couple maximum dynamique Cdyn chute. Comme l'embrayage 7 assure encore une liaison entre l'arbre moteur et l'arbre primaire, le régime Wap de l'arbre primaire est confondu avec le régime Wmth du moteur.

A l'instant t1, l'embrayage 7 est ouvert et reste ouvert jusqu'à l'instant t2. Sur cette période de temps [t1, t2], le couple d'embrayage Cemb et le couple moteur Cmth étant nuls, le calculateur 15 commande le changement de rapport. En outre, l'arbre primaire étant désaccouplé de l'arbre moteur, le régime Wap de l'arbre primaire diminue par rapport au régime Wmth du moteur. Le moteur étant de moins en moins alimenté, le couple maximum dynamique Cdyn continue de chuter.

Entre les instants t2 et t3, après que le calculateur 15 a détecté que le nouveau rapport est engagé (EB=+1), on observe une reprise de couple au cours de laquelle la consigne de couple Ccons envoyée à l'embrayage 7 par le calculateur 15 est supérieure au couple maximum dynamique Cdyn. De préférence, cette consigne Ccons de couple est le couple pleine charge Cstat.

Ainsi, comme représenté, l'embrayage 7 monte très vite en couple et atteint le couple maximum dynamique Cdyn à l'instant t21'. Il n'y a plus donc plus le phénomène de reprise en deux temps de l'état de la technique suivant lequel Cemb atteint d'abord le couple maximum dynamique Cdyn puis le couple pleine charge Cstat en suivant la courbe Cdyn. Le surcouple obtenu par rapport au procédé de l'état de la technique est représenté par une zone hachurée 17.

On note que dans l'invention la période T de temps qui s'écoule entre la mise en glissement de l'embrayage 7 et le moment où le couple pleine charge Cstat est atteint est comprise entre 200 et 600 ms, alors qu'elle est systématiquement supérieure à 600ms dans les procédés de changement de rapport de l'état de la technique.

Lors de la phase de fermeture progressive de l'embrayage 7, le régime Wmth du moteur 4 diminue plus rapidement que dans les procédés de l'état de la technique, la différence de vitesse au moment de la chute de régime étant représentée par une zone hachurée 18. Cette accélération de la chute de régime Wmth du moteur thermique, améliore la perception acoustique du changement de rapport.

En parallèle, le régime Wap de l'arbre primaire tend vers le régime moteur Wmth puis est confondu après l'instant t3 avec le régime moteur Wmth lorsque l'embrayage 7 se ferme.

L'augmentation du couple de l'embrayage 7 pendant la phase embrayage glissant peut être contrôlée de manière calibrable en fonction de l'écart entre le régime Wmth du moteur thermique et le régime Wap de l'arbre primaire de la boîte de vitesses.

En particulier, plus l'écart entre le régime Wmth du moteur et de l'arbre primaire Wap est important, plus le couple prélevé est important pour profiter de l'inertie du moteur. A cet effet, une cartographie A établissant une correspondance entre l'écart de vitesse et le couple Ccons de consigne de l'embrayage 7 peut être stockée dans une mémoire du calculateur de supervision 15.

## Revendications

1. Procédé de changement de rapport de vitesse amélioré mis en oeuvre avec un véhicule comportant une chaîne de traction formée par :
- un moteur (4) thermique apte à être suralimenté par un turbocompresseur (9),
- ce moteur (4) thermique présentant un couple (Cdyn) maximum dynamique correspondant au couple maximum atteignable à un régime donné à un instant donné, et un couple pleine charge (Cstat) correspondant au couple maximum atteignable à un régime donné et sans contrainte de temps de réponse, et
- un embrayage (7) installé entre le moteur (4) thermique et une boîte (6) de vitesses en relation avec un des trains (8) du véhicule,
ce procédé comportant les étapes suivantes :
- ouvrir progressivement l'embrayage (7) de manière à atteindre un couple d'embrayage (Cemb) nul,
- effectuer le changement de rapport de vitesse,
- piloter l'embrayage (7) suivant une consigne de couple (Ccons) lors d'une phase de mise en glissement, et
- fermer l'embrayage (7),
**caractérisé en ce que**
- la consigne de couple (Ccons) lorsque l'embrayage (7) est en phase de glissement est un couple supérieur au couple (Cdyn) maximum dynamique du moteur (4) thermique.

2. Procédé selon la revendication 1, **caractérisé en ce que** la consigne de couple (Ccons) est le couple pleine charge (Cstat).

3. Procédé selon la revendication 1 ou 2, **caractérisé en ce que** la consigne de couple (Ccons) est atteinte entre 200 et 600 ms après que l'embrayage (7) ait commencé à entrer en phase de glissement (période T).

4. Procédé selon l'une des revendications 1 à 3, caractérisé en ce l'augmentation du couple de l'embrayage (Cemb) pendant la phase de glissement est contrôlée de manière calibrable en fonction de l'écart entre le régime (Wmth) du moteur thermique et le régime (Wap) de l'arbre primaire de la boîte (6) de vitesses.

5. Procédé selon la revendication 4, **caractérisé en ce que** plus l'écart entre le régime (Wth) du moteur et le régime (Wap) de l'arbre primaire est important, plus la consigne (Ccons) de couple de l'embrayage (7) est importante pour profiter de l'inertie du moteur.

6. Procédé selon la revendication 4 ou 5, **caractérisé en ce que** une cartographie (C) stockée dans une mémoire d'un calculateur (15) de supervision établit une correspondance entre l'écart de vitesse et le couple (Ccons) de consigne de l'embrayage (7).

## Patentansprüche

1. Verbessertes Verfahren zum Übersetzungswechseln, das mit einem Fahrzeug umgesetzt wird, das eine Zugkette aufweist, die aus Folgendem gebildet ist:
- ein Wärmemotor (4), der geeignet ist, um von einem Turbolader (9) aufgeladen zu werden,
- wobei dieser Wärmemotor (4) ein maximales dynamisches Drehmoment (Cdyn) aufweist, das dem maximalen bei einer gegebenen Drehzahl in einem gegebenen Augenblick erreichbaren Drehmoment entspricht, und ein Volllastdrehmoment (Cstat), das dem maximalen bei einer gegebenen Drehzahl und ohne Reaktionszeitbelastung erreichbaren Drehmoment entspricht, und
- eine Kupplung (7), die zwischen dem Wärmemotor (4) und einem Schaltgetriebe (6), das mit einem der Getriebe (8) des Fahrzeugs verbunden ist, installiert ist,
wobei das für Verfahren die folgenden Schritte aufweist:
- allmähliches Öffnen der Kupplung (7), so dass ein Kupplungsdrehmoment (Cemb) gleich null erreicht wird,
- Ausführen des Übersetzungswechselns,
- Steuern der Kupplung (7) gemäß einem Drehmomentsollwert (Ccons) bei einer Schlupfeintrittsphase, und
- Schließen der Kupplung (7),
**dadurch gekennzeichnet, dass**
- der Drehmomentsollwert (Ccons), wenn die Kupplung (7) in Schlupfphase ist, ein Drehmoment größer als das maximale dynamische Drehmoment (Cdyn) des Wärmemotors (4) ist.

2. Verfahren nach Anspruch 1, **dadurch gekennzeichnet, dass** der Drehmomentsollwert (Ccons) das Volllastdrehmoment (Cstat) ist.

3. Verfahren nach Anspruch 1 oder 2, **dadurch gekennzeichnet, dass** der Drehmomentsollwert (Ccons) zwischen 200 und 600 ms nachdem die Kupplung (7) begonnen hat, in die Schlupfphase (Periode T) einzutreten, erreicht wird.

4. Verfahren nach einem der Ansprüche 1 bis 3, **dadurch gekennzeichnet, dass** die Erhöhung des Kupplungsdrehmoments (Cemb) während der Schlupfphase in Abhängigkeit von dem Unterschied zwischen der Drehzahl (Wmth) des Wärmemotors und der Drehzahl der Hauptwelle (Wap) des Schaltgetriebes (6) kalibrierbar gesteuert wird.

5. Verfahren nach Anspruch 4, **dadurch gekennzeichnet, dass** der Drehmomentsollwert (Ccons) des Drehmoments der Kupplung (7) umso größer ist, je größer der Unterschied zwischen der Drehzahl (Wth) des Wärmemotors und der Drehzahl der Hauptwelle (Wap) ist, um die Trägheit des Motors zu nutzen.

6. Verfahren nach Anspruch 4 oder 5, **dadurch gekennzeichnet, dass** eine Kartographie (C), die in einem Speicher eines Überwachungsrechners (15) gespeichert ist, eine Entsprechung zwischen dem Geschwindigkeitsunterschied und dem Drehmomentsollwert (Ccons) der Kupplung (7) erstellt.

## Claims

1. An improved gear ratio change method implemented with a vehicle comprising a powertrain formed by:
- a heat engine (4) capable of being supercharged by a turbocharger (9),
- this heat engine (4) having a maximum dynamic torque (Cdyn) corresponding to the maximum torque able to be reached at a given speed at a given instant, and a full load torque (Cstat) corresponding to the maximum torque able to be reached at a given speed and without response time constraint, and
- a clutch (7) installed between the heat engine (4) and a gearbox (6) in association with one of the axles (8) of the vehicle,
this method comprising the following steps:
- progressively opening the clutch (7) so as to reach a zero clutch torque (Cemb),
- carrying out the gear ratio change,
- guiding the clutch (7) according to a torque setpoint (Ccons) during a sliding phase, and
- closing the clutch (7),
**characterized in that**
- the torque setpoint (Ccons) when the clutch (7) is in sliding phase is a greater torque than the maximum dynamic torque (Cdyn) of the heat engine (4).

2. The method according to Claim 1, **characterized in that** the torque setpoint (Ccons) is the full load torque (Cstat).

3. The method according to Claim 1 or 2, **characterized in that** the torque setpoint (Ccons) is reached between 200 and 600 ms after the clutch (7) has begun to enter into sliding phase (period T).

4. The method according to one of Claims 1 to 3, **characterized in that** the increase of the clutch torque (Cemb) during the sliding phase is controlled in a calibratable manner as a function of the gap between the heat engine speed (Wmth) and the speed (Wap) of the primary shaft of the gearbox (6).

5. The method according to Claim 4, **characterized in that** the greater the gap is between the speed (Wth) of the engine and the speed (Wap) of the primary shaft, the greater the torque setpoint (Ccons) of the clutch (7) is for taking advantage of the inertia of the engine.

6. The method according to Claim 4 or 5, **characterized in that** a mapping (C) stored in a memory of a monitoring computer (15) establishes a correspondence between the speed gap and the setpoint torque (Ccons) of the clutch (7).
